Europäisches Patentamt

European Patent Office

Office européen des brevets

(19)

(11) Veröffentlichungsnummer: **0 201 821**
**B1**

(12) **EUROPÄISCHE PATENTSCHRIFT**

(45) Veröffentlichungstag der Patentschrift: **08.08.90**

(21) Anmeldenummer: **86106074.7**

(22) Anmeldetag: **02.05.86**

(51) Int. Cl.⁵: **B 23 Q 1/26, F 16 C 29/02**

(54) **Führungsanordnung an Arbeitsmaschinen.**

(30) Priorität: **06.05.85 DE 3516238**

(43) Veröffentlichungstag der Anmeldung:
**20.11.86 Patentblatt 86/47**

(45) Bekanntmachung des Hinweises auf die
Patenterteilung:
**08.08.90 Patentblatt 90/32**

(84) Benannte Vertragsstaaten:
**CH DE FR GB IT LI SE**

(56) Entgegenhaltungen:
**CH-A- 634 243**
**FR-A-1 381 761**
**JP-A-57 061 437**
**US-A-2 322 972**

(73) Patentinhaber: **Boehringer Werkzeugmaschinen
GmbH
Stuttgarter Strasse 50 Postfach 220
D-7320 Göppingen (DE)**

(72) Erfinder: **Kuhn, Siegfried
Kornbergstrasse 28/1
D-7321 Dürnau (DE)**
Erfinder: **Kreher, Peter-Jürgen, Dr. Ing.
Brehmstrasse 3
D-7320 Göppingen (DE)**

(74) Vertreter: **Vogeser, Werner, Dipl.-Ing. et al
Patentanwälte Hansmann & Vogeser Albert-
Rosshaupter-Strasse 65
D-8000 München 70 (DE)**

EP 0 201 821 B1

# Beschreibung

Die Erfindung betrifft eine Führungsanordnung an einer Arbeitsmaschine entsprechend dem Oberbegriff des Anspruchs 1.

Bei einer Arbeitsmaschine, die ja ganz allgemein Stoffe mit Hilfe der zugeführten mechanischen Energie umformt oder transportiert, werden die enzelnen Einheiten der Maschine relativ zueinander bewegt, indem sie entlang der Führungsbahnen von Führungen verschoben werden. Bei einer Werkzeugmaschine beispielsweise sind auf diese Weise etwa Werkstückhalterung und Werkzeughalterung, jeweils angetrieben oder nicht, Längs- und Querschlitten, Reitstock, Lünette o.ä. relativ zueinander bzw. relativ zum Maschinengrundgestell beweglich, so daß innerhalb eines durch die Baugröße vorgegebenen Rahmens jede Position der einzelnen Einheiten relativ zueinander, jederzeit und beliebig oft durch reproduzierbares, möglichst genaues Verfahren einzelner Einheiten erreicht werden kann, um die gewünschte Bearbeitung der Werkstücke zu ermöglichen. Diese verfahrbaren Einheiten werden dabei entlang von Führungsbahnen verschoben, die zur definierten Bewegung der verfahrbaren Einheiten einer bestimmten geometrischen Figur, meist einer Geraden bzw. einer Ebene, möglichst nahe kommen sollen.

Dies läßt sich normalerweise nur durch mechanische Feinbearbeitung, beispielsweise Schleifen und Schaben, erreichen. Die Führungsbahnen bestehen üblicherweise aus Stahl oder Grauguß, in Einzelfällen auch aus natürlich vorkommenden, harten Mineralien, wie beispielsweise Marmor, und können sowohl aus dem gleichen Material wie das sie tragende Maschinenteil als auch aus anderem Material gefertigt sein, und Führungsbahnen und Maschinenfundament können entweder aus einem Stück hergestellt oder aus mehreren Teilen zusammengefügt sein. Als Materilien für das Maschinenfundament werden außer Stahl und Grauguß auch Beton und Verbundstoffe auf Kunststoffbasis verwendet. Das Fundament der Werkzeugmaschinen muß stabil genug sein, um Verformungen der Führungsbahnen durch die beim Betrieb der Werkzeugmaschinen auftretenden Kräfte zu verhindern bzw. möglichst gering zu halten.

So zeigt etwa die französische Schrift FR—A—1,381,761 eine Arbeitsmaschine mit einem metallenen Tragkörper und darin verklebten Führungsbahnen aus Glas. Auch die japanische Patentschrift JP—A—57/61437 zeigt eine Führungsanordnung einer Wirkzeugmaschine an einem Tragkörper aus einem fließfähigen Material wie etwa Metall, auf welchem Führungsbahnen aus Keramikmaterial aufgeschraubt werden. Die Fließfähigkeit ist dort Voraussetzung der Verschraubung, da die keramischen Führungsbahnen auf eine Vielzahl parallel laufender Rinnen und Erhebungen aufgesetzt werden, deren Spitzen beim Aufpressen der Keramikbahnen durch einen Fließvorgang in die Senken abwandern soll, wodurch eine gleichmäßige Auflage der keramischen Führungsbahnen, allerdings nicht über die volle Fläche, erzielt werden soll.

Die für die Herstellung der Führungsbahnen, und, wie beschrieben, zum Teil auch des Maschinenfundamentes, verwendeten Materialien weisen eine Reihe von unerwünschten Eigenschaften auf:

Die verwendeten metallischen Werkstoffe können bisher durch Urformung nicht genau genug hergestellt werden, um die entstehenden Flächen als Führungsbahnen zu benutzen. Deshalb ist eine aufwendige spanende Bearbeitung der Führungsbahnen, beispielsweise durch Fräsen, Schleifen und Schaben, notwendig, um eine Oberfläche zu erhalten, die der idealen geometrischen Flächee nahe genug kommt. Diese mechanische Bearbeitung ist aufgrund des hohen Zeitaufwandes sehr kostspielig und ausschußfreudig.

Ein zielgerichtetes und genaues Verfahren der beweglichen Einheiten der Arbeitsmaschine auf den Führungsbahnen ohne allzu hohe Antriebskräfte ist nur dadurch möglich, daß die Reibung zwischen den Führungsbahnen und den auf ihr zu verschiebenden Gegenstücken möglich gering gehalten wird. Die aus diesem Grunde erfolgende Schmierung zwischen der Führungsbahn und dem Gegenstück mittels Öl oder anderen Schmierstoffen kann dennoch nicht die erhöhte Anlaufreibung zu Beginn der Relativ-bewegung bzw. Beschädigungen der Führungsbahnen bei Ausfall des Schmiersystems aufgrund der schlechten Notlaufeigenschaften der Materialien Stahl und Grauguß verhindern. Auch die trotz Schmierung gegenüber der Gleitreibung wesentlich höhere Haftreibung bei den angesprochenen Materialien ist unerwünscht, da dadurch das häufige Verfahren um kleine Strecken sehr erschwert wird.

Die starke Wärmedehnung der verwendeten metallischen Materialien stellt ein Problem dar, da durch diese beim Temperaturänderung die Relativpositionen der einzelnen Maschineneinheiten zueinander verändert werden können.

Die Elastizität der Materialien Stahl und grauguß ist insofern nachteilig, als dadurch bei periodisch sich wiederholenden Be- und Entlastungen, wie sie bei der Bearbeitung von Werkstücken auftreten können, sich Schwingungen in den Führungsbahnen bzw. im Maschinengestell aufbauen können, die dann durch Übertragung auf die einzelnen Einheiten der Werkzeugmaschine Oberflächengüte und Maßhaltigkeit des fertigen Werkstückes negtiv beeinflussen können.

Ein weiterer Nachteil ist der Verschleiß bei der Verwendung der genannten Materialien für Führungsbahnen der aus der, zusammen mit den hohen auftrietenden Belastungen, zu geringen Härte des Materials, der nicht ausreichenden chemischen Resistanz und der schlechten Notlaufeigenschaften resultiert. Im praxisnahen Betrieb einer Werkzeugmaschine ist es kaum möglich, das völlige oder teilweise Ausfallen des Schmiersystems oder das Einwirken von wasser- oder säurehaltigen Kühl- und Schmiermittlen sowie Schmutzpartikeln, speziell Schleifstaub, auf die Führungsbahnen vollständig zu vermeiden.

Die Abmessungen und damit auch das Gewicht der Führungsbahnen und dadurch auch der Arbeitsmaschine können, begrenzt durch die maximale Flächenpressung der Materialien, nicht weiter verringert werden.

Der Erfindung liegt die Aufgabe zugrunde, eine Führungsanordnung an einer Arbeitsmachine zu schaffen, die insgesamt einfach herzustellen ist, und bei der dennoch die Führungsbahnen minimale Wärmedehnung und Elastizität aufweisen, sehr hart sind, gute Notlaufeigenschaften aufweisen und einfach und sehr genau hergestellt werden können.

Diese Aufgabe wird erfindungsgemäß durch die im kennzeichnenden Teil des Anspruchs 1 angegebenen Merkmale gelöst.

Die Führungsbahnen der Arbeitsmaschine werden hierzu aus sinterfälligen Nichtmetallen, insbesondere aus keramischem Material, hergestellt.

Da aus Keramikmaterial gesinterte Werkstücke äußerst maßhaltig durch Urformung hergestellt werden können, entfallen kosten- und zeitaufwendige mechanische oder thermische nachbearbeitungen wie Härten, Schleifen, Schaben etc.

Auch bei keramischen Führungsbahnen empfiehlt sich zwar die Schmierung der Führungsbahnen im Hinblick auf eine Herabsetzung der Antriebsleistung zur Verschiebung der einzelnen Einheiten entlang der Führungsbahnen, jedoch hat ein Ausfall des Schmiersystems geringere Folgen als bei der Verwendung von metallischen Werkstoffen für die Führungebahnen, da die Notlaufeigenschaften des Keramikmaterials durch die im Material vorhandenen sehr feinen Kalotten, in denen auch bei Ausfall des Schmiersystems noch ein Rest Schmiermittel vorhanden ist, und die höhe Härte des Materials, die praktisch keinen Verschleiß zuläßt, wesentlich günstiger sind.

Auch die Anlaufreibung sowie der Unterschied zwischen Haft- und Gleitreibung sind aufgrund der eben angesprochenen Umstände geringer als bei den bisher für Führungsbahnen verwendeten Materialien.

Die Wärmedehnung des Keramikmaterials ist so gering, daß auch bei sehr langen Führungsbahnen keine die Maßhaltigkeit des zu fertigenden Werkstückes beeinflussende Veränderung der Relativpositionen der einzelnen Einheiten der Werkzeugmaschine auftritt.

Die sehr geringe Elastizität der Keramik verhindert das Auftreten von Schwingungen und Resonanz.

Die hohe Härte des Materials verhindert einen Abrieb und damit Verschleiß der Führungsbahnen im Betrieb der Werkzeugmaschine auch bei ungenügenden Schmierverhältnissen. Damit verliert auch die sonst so gefürchtete Verschmutzung der Führungsbahnen oder auch des Schmiermittels an Bedeutung. Besonders bei Schleifmaschinen führte die nie ganz zu vermeidende Ablagerung des Schleifstaubes auf den Führungsbahnen zu einem Einschleifen des Staubes in die Oberflächen des Führungsbahnen durch den Betrieb der Werkzeugmaschine, was eine erhöhte Reibung beim Verfahren der Einheiten der Werkzeugmaschine sowie eines geringere Maßhaltigkeit beim Positionieren dieser Einheiten zur Folge hatte.

Da das Keramikmaterial auch gegen Oxidationsmittel weitgehend resistent ist, kann eine Berührung der Fünrungsbahnen mit wasserhaltigem Kühlmittel und leicht säurehaltigen Schmierstoffen ohne Bedenken in Kauf genommen werden.

Da die Flächenpressungen, die die Keramik aufzunehmen vermag, wesentlich höher liegen als die von Stahl oder Grauguß, können die auftretenden Belastungen von wesentlich geringeren Übertragungsflächen aufgenommen werden, ausreichende Unterstützung durch das Maschinenbett vorausgesetzt, so daß bei gleichen Belastungen geringere bauliche Abmessungen und damit auch ein geringerers Gewicht sowohl der Führungsbahnen als auch des gesamten Maschinenbettes möglich wird.

Und nicht zuletzt liegt der Vorteil des keramischen Materials darin, daß es eine Korngröße aufweist, die der Korngröße des Betons, eines möglichen Baustoffes für das masschinenbett, wesentlich näher kommt als die Korngröße von Grauguß oder Stahl. Dadurch läßt sich beim Verkleben oder Eingießen der Führungsbahnen aus Keramik mit einem bzw. in ein Maschinenbett aus Beton eine wesentlich bessere Verbindung erreichen, als beim Verkleben oder Eingießen von Materialien mit stark unterschiedlichen Korngrößen.

**Patentanspruch**

Lineare Führungsanordnung an einer Arbeitsmachine, insbesondere einer Schlittenführung an einer Werkzeugmaschine, bestehend aus einem verwindungssteifen, schwingungsdämpfenden Maschinenbett und mindestens einem daran befestigten, bzw. darin integrierten, für sich alleine nicht verwindungssteifen, die Führungsbahnen bildenden Körper aus sinterfähigen Nichtmetallen, insbesondere Keramikmaterial, dadurch gekennzeichnet, daß die die Führungsbahnen bildenden Körper mit dem Tragkörper verklebt bzw. in diesen eingegossen sind und das Maschinenbett aus einem Material besteht, dessen Korngröße sich von der des sinterfähigen Nichtmetalls weniger unterscheidet als die Korngröße von Stahl oder Grauguß.

**Revendication**

Dispositif de guidage linéaire sur une machine productrice, en particulier pour un guidage de coulisseau sur une machine-outil, se composant d'un banc-machine présentant une rigidité au gauchissement, amortissant les vibrations, et au moins un corps en matériau non métallique frittable, en particulier en céramique, fixé sur le banc-machine, respectivement intégré à celui-ci, ne présentant pas seul de résistance au gauchissement, formant les pistes de guidage, caractérisé en ce que les corps formant les pistes de guidage sont collés aux corps du support ou coulés dans ceux-ci, et que le banc-machine se compose d'un matériau dont la taille du grain diffère moins de celle du matériau non métallique frittable que le ferait l'acier ou la fonte grise.

**Claim**

Linear guide system on a working machine, particularly a carriage guide on a machine tool, consisting of a torsion-resisting, vibration-damping machine bed and at least one body made of sinterable non-metallic materials, affixed thereto or integrated therein, not in itself torsion-resisting and forming the guideways, particularly a ceramic material, characterized by the fact that the bodies forming the guideways are combined with the supporting body by means of an adhesive or are cast into it and that the machine bed consists of a material of which the grain size differs less than that of steel or grey cast iron from that of the sinterable non-metallic material.